# EUROPÄISCHE PATENTSCHRIFT

(11) **EP 1 746 053 B1**
(45) Veröffentlichungstag und Bekanntmachung des Hinweises auf die Patenterteilung: **10.10.2007**
(21) Anmeldenummer: 05015617.3
(22) Anmeldetag: 19.07.2005
(51) Int. Cl.: B65G 47/29, B65G 47/88, B23Q 16/00

(54) **Anschlag- und Dämpfermodul**
Stop and damper module
Butée avec amortisseur

(43) Veröffentlichungstag der Anmeldung: 24.01.2007
(73) Patentinhaber: Wörner, Helmut, 73770 Denkendorf (DE); Unterhuber, Sebastian, 73257 Köngen (DE)
(72) Erfinder: Wörner, Helmut, 73770 Denkendorf (DE); Unterhuber, Sebastian, 73257 Köngen (DE)
(74) Vertreter: Vogler, Bernd

(56) Entgegenhaltungen:
- EP-A- 0 484 648
- EP-A- 0 713 980
- EP-A- 1 621 491
- DE-U1- 29 904 234
- US-A1- 2003 116 408

## Beschreibung

Die Erfindung betrifft ein Anschlagmodul, insbesondere für automatische Bearbeitungs- und Fördereinrichtungen, mit einem an einem Grundkörper angeordneten Anschlagglied für sich in einer Bewegungsebene in einer aktuellen Arbeitsbewegungsrichtung bewegende Gegenstände, das mittels eines fluidisch betätigbaren Stellgliedes aus dieser Bewegungsebene heraus und in diese zurückbewegbar ist, wobei wenigstens ein Positionssensor vorgesehen ist, mit dem wenigstens die Anschlagposition des an das Anschlagglied anschlagenden Gegenstandes erfassbar ist.

Ein Anschlagmodul dieser Art ist aus der EP 0 484 648 bekannt. Der dort beschriebene Anschlag ist mittels eines pneumatisch betätigbaren Stellkolbens aus der Bewegungsbahn anfahrender Werkstücke heraus und in diese zurückbewegbar. Für die Druckluftbeaufschlagung ist am Gehäuse ein Druckluftanschluss vorgesehen, über den gesteuert Druckluft zugeführt wird. Ferner ist dem Anschlag eine Dämpfungseinrichtung zugeordnet, so dass die Bewegung der anschlagenden werkstücke abgedämpft werden kann. Es ist hier ein Positionssensor vorgesehen, der die Endanschlagstellung des Anschlags erfasst.

Aus der DE 299 04 234 U1 ist eine fluidische Arbeitseinheit in Form eines doppeltwirkenden Pneumatikzylinders bekannt. Dem Pneumatikzylinder ist ein Ventil zugeordnet, das an der Außenseite des Pneumatikzylinders derart angeflanscht ist, dass mindestens ein Arbeitskanal des Ventils direkt in einen korrespondierenden und im Pneumatikzylinder integrierten Kanal mündet. Die Ansteuerung des Ventils verfolgt über eine ebenfalls an der Außenseite des Pneumatikzylinders sitzende Anschlussbox, die eine Elektronikeinheit beherbergt, die Bussignale empfangen und in Ansteuersignale für den Elektromagneten des Ventils umsetzen kann. Es ist ferner ein Sensor zur Erfassung des Position des Kolbens im Pneumatikzylinder vorgesehen, wobei die Sensorsignale an die Anschlussbox übermittelt und verarbeitet werden können.

Die EP 0 713 980 A2 offenbart eine Antriebsvorrichtung in Form eines Linearantriebs mit zwei translatorisch relativ zueinander bewegbaren Baueinheiten. An der ersten Baueinheit sind zur Steuerung und/oder Überwachung des Betriebs dienende Funktionseinheiten in Form von Sensoren angeordnet. Sie stehen über in die erste Baueinheit integrierte Signalleiter mit einem ebenfalls an der ersten Baueinheit angeordneten Knotenelementen in Verbindung. Zur Verringerung des Installationsaufwandes und zur Erhöhung der Zuverlässigkeit enthält das Knotenelement eine zentrale Signalverarbeitungselektronik für die von den Funktionseinheiten kommenden und für die zu den Funktionseinheiten zu übertragenen Signale.

Aus der EP 1 621 491 A1, Veröffentlichungestag 01.02.06, ist eine Anhaltevorrichtung zum Anhalten einer sich in einer Transportrichtung bewegenden Transporteinheit beschrieben. Es ist eine Stelleinheit vorgesehen, an deren oberem Ende ein Anhalteelement schwenkbar gelagert ist und mittels der Stelleinheit wahlweise in die Bewegungsbahn der Transporteinheit hinein- oder aus dieser herausgeschwenkt werden kann. Ferner sind vor und nach der Stelleinheit Sensoreinheiten angeordnet, worüber die Anwesenheit einer Transporteinheit detektierbar ist. Die Erfassungsergebnisse der Sensoreinheiten werden an einer an Bord der Anhaltevorrichtung befindlichen Steuereinheit übermittelt. Darüber hinaus übermittelt die Steuereinheit für den Betrieb der Stelleinheit erforderliche Stellsignale an eine als Wegeventil ausgebildete Schalteinheit. Die Signalübertragung an eine externe Steuervorrichtung erfolgt über einen Feldbus. Eine Steuereinheit enthält das Steuerventil und einen Positionssensor, eine andere enthält einen Positionssensor und die Busstation. Aufgabe der Erfindung ist es, ein Anschlagmodul der eingangs erwähnten Art zu schaffen, das gegenüber herkömmlichen Anschlagmodulen bzw. Anschlägen universeller, insbesondere platzsparender und somit kostengünstiger einsetzbar ist.

Diese Aufgabe wird erfindungsgemäß durch ein Anschlagmodul mit den Merkmalen des unabhängigen Anspruchs 1 gelöst. Weiterbildungen der Erfindung sind in den Unteransprüchen dargestellt.

Das erfindungsgemäße Anschlagmodul zeichnet sich dadurch aus, dass in das Anschlagmodul eine Busstation für ein Bussystem zur Erfassung und Verarbeitung von Positionssensorsignalen des wenigstens einen Positionssensors und wenigstens ein über das Bussystem elektrisch ansteuerbares, zur Ansteuerung des Stellgliedes dienendes Steuerventil integriert sind, wobei eine vom Grundkörper getrennt ausgebildete, daran insbesondere lösbar befestigte Steuermoduleinheit vorgesehen ist, in der die Busstation, das Steuerventil und wenigstens einer der Positionssensoren aufgenommen ist.

Dadurch ist eine höhere Funktionalität gegenüber herkömmlichen Anschlagmodulen gegeben, da durch die integrierte Busstation eine Verarbeitung der Positionssensorsignale bereits an Bord des Anschlagmoduls erfolgen kann. Hingegen ist es bei den herkömmlichen Anschlagmodulen notwenig, die Positionssensorsignale zunächst zu einer externen Steuereinrichtung zwecks deren Verarbeitung zu leiten und dann die Signalantwort wieder zurückzuleiten. Ein weiterer Vorteil ist, dass das Steuerventil ebenfalls bereits in das Anschlagmodul integriert ist, so dass eine unkomfortable, insbesondere relativ viel Platz beanspruchende Fluidverbindung zwischen dem Anschlagmodul und einem externen Steuerventil entfallen kann. Mit dem erfindungsgemäßen Anschlagmodul können also Funktionen durchgeführt werden, die sonst bei herkömmlichen Anschlagmodulen durch externe Komponenten durchzuführen sind. Dadurch lässt sich das erfindungsgemäße Anschlagmodul beispielsweise auch an Bearbeitungs- und Fördereinrichtungen einsetzen, die ein geringes Platzangebot für Zusatzkomponenten aufweisen.

Das Stellglied ist mittels eines fluidischen Druckmediums fluidisch betätigbar. Bei dem fluidischen Druckmedium handelt es sich bevorzugt um Druckluft. Es können jedoch auch andere gasförmige oder hydraulische Druckmedien eingesetzt werden.

Bei einer Weiterbildung der Erfindung besitzt das Anschlagmodul wenigstens einen Fluidanschluss zum Anschließen einer ungesteuerten Fluidleitung. Es ist also möglich, das Anschlagmodul direkt mit einem Drucklufterzeuger bzw. einem Druckluftspeicher ohne Umweg über ein externes Steuerventil zu verbinden. Bei den herkömmlichen Anschlägen muss hingegen der Umweg über das externe Steuerventil gefahren werden, wodurch dem Anschlagmodul bereits gesteuerte Druckluft geführt wird.

In besonders bevorzugter Weise besitzt das Anschlagmodul wenigstens einen Busanschluss zum Anschließen einer Busleitung. Es ist also möglich, die im Anschlagmodul befindliche Busstation zusätzlich noch an eine externe Steuereinrichtung anzuschließen, so dass die Möglichkeit besteht, die Positionssensorsignale entweder in der an Bord befindlichen Busstation zu verarbeiten oder die Positionssensorsignale über die Busstation an die externe Steuereinrichtung weiterzuleiten und dort eine Signalverarbeitung durchzuführen. Auch eine Kombination von Signalverarbeitung an Bord und Signalverarbeitung extern ist möglich. Alternativ kann auch eine drahtlose Übertragung der Sensorsignale zur internen Busstation und/oder zur externen Steuereinrichtung erfolgen.

Besonders bevorzugt sind der wenigstens eine Fluidanschluss und der wenigstens eine Busanschluss an derselben Außenseite des Anschlagmoduls angeordnet. Dadurch kann eine komfortable Anschlusssituation geschaffen werden, da das Anschließen sämtlicher Medienleitungen von einer Seite her möglich ist. Selbstverständlich ist es auch möglich, den wenigstens einen Fluidanschluss und den wenigstens einen Busanschluss an unterschiedlichen Außenseiten des Anschlagmoduls anzubringen.

Es ist möglich, dass wenigstens einer der Positionssensoren zur Erfassung der oberen, in der Bewegungsbahn der Gegenstände befindlichen Funktionsposition des Anschlagglieds vorgesehen ist. Dadurch kann festgestellt werden, ob sich das Anschlagglied in seiner oberen Funktionsposition oder eingefahren in seiner unteren Einfahrposition befindet.

In bevorzugter Weise ist wenigstens einer der Positionssensoren zur Erfassung der Position eines passierenden Gegenstandes vorgesehen. Dadurch kann festgestellt werden, ob ein betreffender Gegenstand gerade das Anschlagmodul überfährt und/oder ob der Gegenstand das Anschlagmodul bereits überfahren hat.

Bei einer Weiterbildung der Erfindung besitzt das Anschlagmodul eine Dämpfungseinrichtung mittels der das Anschlagglied zwischen einer ersten Anschlagstellung und einer zweiten Endanschlagstellung gedämpft bewegbar ist, wobei es sich bei der mittels des wenigstens einen Positionssensors erfassbaren Anschlagposition um die Endanschlagstellung des Anschlagglieds handelt. Es kann also festgestellt werden, ob sich das Anschlagglied in seiner Endanschlagstellung befindet oder nicht.

Prinzipiell wäre jedoch auch ein ungedämpftes Anschlagglied einsetzbar, wobei es sich dann bei der mittels des wenigstens einen Positionssensors erfassbaren Anschlagposition um die Kontaktposition beim Kontakt zwischen dem anschlagenden Gegenstand und dem Anschlagglied handelt.

In besonders bevorzugter Weise sind wenigstens drei Positionssensoren vorgesehen, wobei mit wenigstens einem die Endanschlagstellung des Anschlagglieds, mit wenigstens einem die Position eines passierenden Gegenstandes und mit wenigstens einem die obere Funktionsposition des Anschlagglieds festgestellt werden kann.

In besonders bevorzugter Weise handelt es sich bei dem Bussystem um ein Feldbussystem, insbesondere um ein AS-i-Bussystem. Es sind selbstverständlich auch andere Feldbussysteme einsetzbar, beispielsweise VMEbus-, CAN-, Versabus-Bussysteme.

Das Anschlagmodul besitzt eine vom Grundkörper getrennt ausgebildete, daran insbesondere lösbar befestigte Steuermoduleinheit, in der die Busstation, das Steuerventil und wenigstens einer der Positionssensoren aufgenommen ist. Die zur Steuerung benötigten Komponenten sind also kompakt in dieser Steuermoduleinheit untergebracht. Dadurch, dass die Steuermoduleinheit lösbar am Grundkörper befestigbar ist, ist es möglich, diese bei Bedarf auszutauschen und gegen eine andere, beispielsweise mit einer anderen Busstation bestückten Steuermoduleinheit zu ersetzen.

Das im Anschlagmodul befindliche Steuerventil kann als Magnetventil ausgebildet sein. Alternativ ist es möglich, ein Schieberventil einzusetzen.

Ein bevorzugtes Ausführungsbeispiel der Erfindung ist in den Zeichnungen dargestellt und wird im Folgenden näher erläutert. Die Zeichnungen zeigen:
- Figur 1: ein bevorzugtes Ausführungsbeispiel des erfindungsgemäßen Anschlagmoduls in perspektivischer Ansicht,
- Figur 2: das Anschlagmodul von Figur 1 im Längsschnitt entlang der Linie II-II aus Figur 1,
- Figur 3: das Anschlagmodul von Figur 1 in einer Ansicht von unten und
- Figur 4: eine teilweise geschnittene Draufsicht auf das Anschlagmodul von Figur 1.

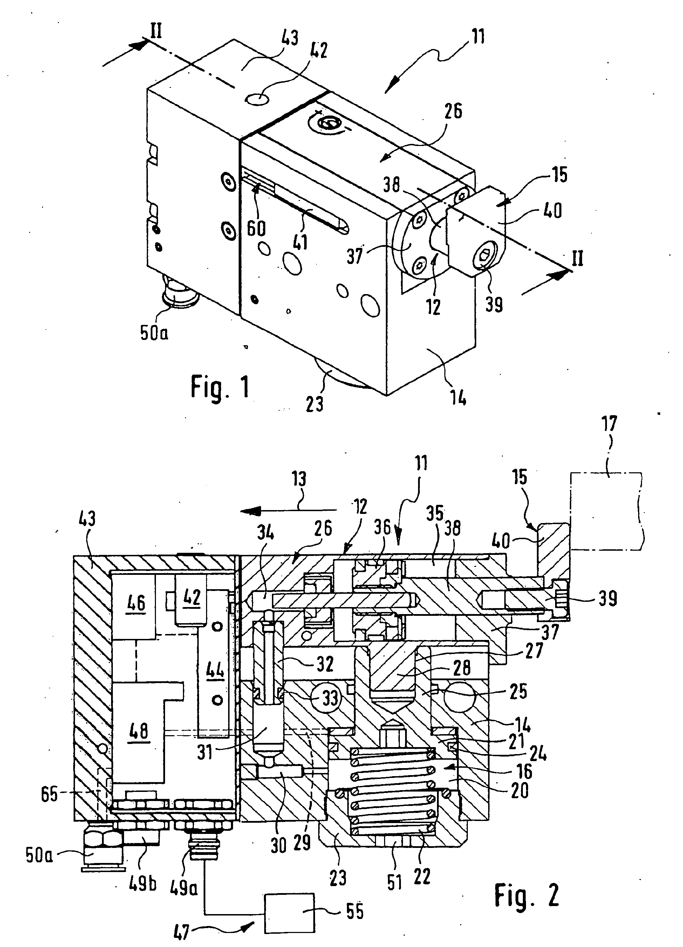

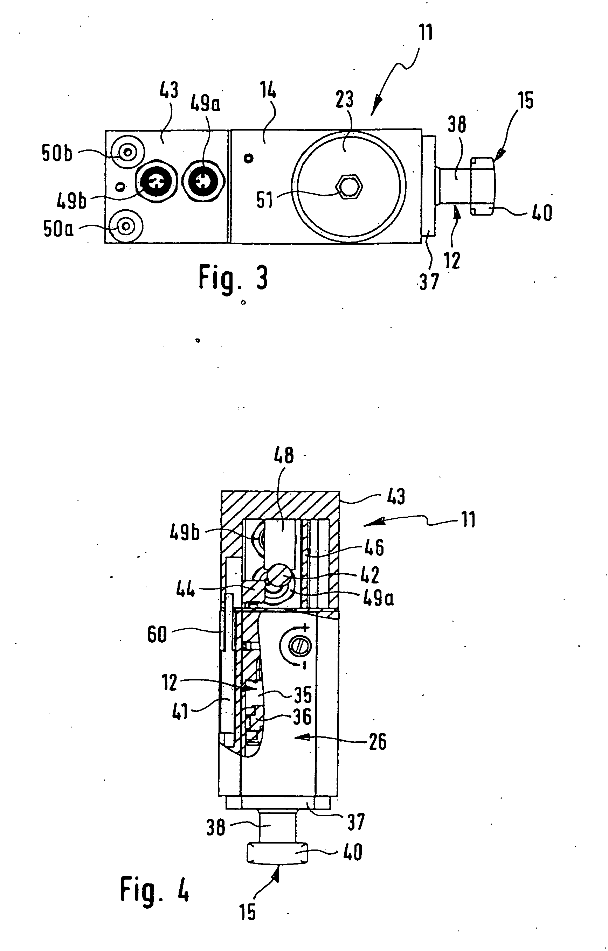

Die Figuren 1 bis 4 zeigen ein bevorzugtes Ausführungsbeispiel des erfindungsgemäßen Anschlagmoduls 11, das im Folgenden beispielhaft anhand eines solchen mit Dämpfungseinrichtung 12 erläutert wird. Es ist jedoch auch möglich, das wurde vorstehend bereits erwähnt, ein Anschlagmodul 11 ohne Dämpfungseinrichtung zu verwenden.

Das Anschlagmodul 11 wird vorzugsweise in automatischen Bearbeitungs- und Fördereinrichtungen eingesetzt, um sich in einer Bewegungsebene in einer Arbeitsbewegungsrichtung 13 bewegende Gegenstände 17, beispielsweise Werkstücke oder dergleichen zu vereinzeln. Nach der Vereinzelung können die Gegenstände 17 dann individuell behandelt werden, beispielsweise bearbeitet, umgeleitet usw. werden.

Das Anschlagmodul besitzt einen Grundkörper 14, an dem ein Anschlagglied 15 angeordnet ist, das mittels eines fluidisch betätigbaren Stellgliedes 16 aus der Bewegungsebene der Gegenstände 17 heraus und in diese zurückbewegbar ist. Ferner ist noch die bereits erwähnte Dämpfungseinrichtung 12 vorgesehen, mittels der das Anschlagglied 15 von einer ersten Anschlagstellung bis zu einer zweiten Endanschlagstellung gedämpft bewegbar ist.

Der prinzipielle Aufbau und die Funktionsweise eines derartigen Anschlagmoduls 11 mit Dämpfungseinrichtung 12 ist aus der EP 0 484 648 entnehmbar, auf die hier explizit verwiesen wird.

Wie insbesondere in Figur 2 dargestellt, ist ein pneumatisches Stellglied 16 vorgesehen, das ein in einem Zylinderraum 20 des Grundkörpers 14 verschiebbar geführten Stellkolben 21 aufweist. Dieser Stellkolben 21 wird mittels einer Stellfeder, insbesondere Schraubenfeder 22, die zwischen seiner unteren Stirnseite und einem unteren Deckel 23 angeordnet ist, in seiner oberen Endposition gehalten. Der Stellkolben 21 ist mittels einer Kolbendichtung 24 dichtend an der Wandung des Zylinderraums 20 geführt. Der Steuerkolben 21 geht in seiner oberen Stirnseite einstückig in eine großzügig dimensionierte Kolbenstange 25 über. Alternativ wäre es auch möglich, den Stellkolben 21 mittels Befestigungsmitteln, insbesondere einer Schraubverbindung, mit der Kolbenstange 25 zu verbinden. Die Kolbenstange 25 erstreckt sich durch den oberen Bereich des Grundkörpers 14 hindurch und ist mit ihrem oberen freien Ende an einem Dämpfungszylinder 26 der Dämpfungseinrichtung 12 fixiert. Die Fixierung ist hier beispielhaft dadurch dargestellt, dass die Kolbenstange 25 an ihrem oberen Ende eine sacklochartige Ausnehmung 27 aufweist, in die ein am Dämpfungszylinder 26 ausgebildeter bolzenartiger Fortsatz 28 aufgenommen ist. Um eine Relativbewegung zwischen dem Dämpfungszylinder 26 und der Kolbenstange 25 zu verhindern, kann eine Presspassung zwischen der sacklochartigen Ausnehmung 27 und dem zapfenartigen Vorsprung 28 vorgesehen sein.

Eine erste mit einem pneumatischen Steuerdruck P beaufschlagbare Druckleitung 29 verläuft durch eine seitliche Wandung des Grundkörpers 14 und mündet an der oberen Kante bzw. an der oberen Stirnfläche des Stellkolbens 21.

Etwa in halber Höhe des Zylinderraums 20 verläuft eine zweite Druckleitung 30 zwischen dem Zylinderraum 20 und der Außenseite des Grundkörpers 14. Von der zweiten Druckleitung 30 aus verläuft eine dritte, zylinderartig ausgebildete Druckleitung 31 vertikal nach oben bis zur Grundkörper-Außenseite. Vom Dämpfungszylinder 26 aus erstreckt sich eine vierte, kolbenartig ausgebildete Druckleitung 32 nach unten und dichtend in die dritte Druckleitung 31 hinein. Zur dichtenden Führung dient dabei eine die vierte Druckleitung 32 umgreifende Dichtung 33. Die vierte, kolbenartig ausgebildete Druckleitung 32 ist bewegungsstabil mit dem Dämpfungszylinder 26 verbunden, beispielsweise durch Verschrauben, Verschweißen, Verkleben, Verlöten, Einpressen oder dergleichen. Die vierte, kolbenartige Druckleitung 32 ist über eine weitere fünfte Druckleitung 34 mit einem Zylinderraum 35 des Dämpfungszylinders 26 verbunden, indem ein Dämpfungskolben 36 verschiebbar geführt ist und mittels einer Kolbendichtung gegen die Wandung des Zylinderraums 35 abgedichtet ist.

Am Dämpfungskolben 36 ist das L-förmig ausgebildete Anschlagglied 15 angebracht, das durch einen den Zylinderraum 35 abschließenden Zylinderdeckel 37 hindurchreicht. Das Anschlagglied 15 ist hier beispielhaft in Form eines zweiteiligen Anschlaggliedes 15 dargestellt, mit einem koaxial zur Zylinderachse des Dämpfungszylinders 26 verlaufenden, mit dem Dämpfungskolben 36 verbundene Basiskörper 38 und einem mit dem Basiskörper über Befestigungsmittel, insbesondere eine Schraubverbindung 39 verbundenen, nach oben abgewinkelten Schenkel 40. Es ist selbstverständlich auch möglich, ein einstückig ausgebildetes Anschlagglied einzusetzen.

Es ist ferner noch ein erster Positionssensor 41 vorgesehen, über den die Anschlagposition des an das Anschlagglied 15 anschlagenden Gegenstandes 17 feststellbar ist. Im Falle des hier beschriebenen Anschlagmoduls mit Dämpfungseinrichtung wird der erste Positionssensor eingesetzt, um die Endanschlagstellung 19 des Anschlagglieds 15 zu erfassen. Der erste Positionssensor 41 sitzt in einer schlitzartigen Ausnehmung 60 am Dämpfungszylinder 26 und spricht dann an, falls der Dämpfungskolben 36 ganz eingefahren ist. Alternativ wäre es möglich, den ersten Positionssensor 41 im Zylinderdeckel anzuordnen, so dass er, beispielsweise als Nährungssensor ausgebildet, die Annäherung des Schenkels 40 des Anschlagglieds 15 erfasst.

Darüber hinaus ist ein zweiter Positionssensor 42 vorgesehen, der zur Erfassung der Position eines passierenden Gegenstandes vorgesehen ist. Der zweite Positionssensor 42 kann hierzu an der Oberseite einer nachfolgend näher beschriebenen Steuermoduleinheit 43 aufgenommen sein. Schließlich ist noch ein dritter Positionssensor 44 vorgesehen, der zur Erfassung der oberen in der Bewegungsbahn der Gegenstände befindlichen Funktionsposition des Anschlagglieds 15 dient.

In das Anschlagmodul 11 ist eine Busstation 46 für ein Bussystem 47 zur Erfassung und Verarbeitung von Positionssensorsignalen des wenigstens einen Positionssensors 41, 42, 44 und wenigstens ein über das Bussystem 47 elektrisch ansteuerbares, zur Ansteuerung des Stellgliedes 16 dienendes Steuerventil 48 integriert. Als Bussystem wird vorzugsweise ein AS-i-Bussystem verendet.

Das Steuerventil 48 und die in Figur 2 schematisch dargestellte Busstation 46 sitzen in der bereits erwähnten Steuermoduleinheit 43, die ihrerseits lösbar am Rest des Anschlagmoduls 11, also am Grundkörper 14 und an der Dämpfungseinrichtung 12 befestigt sind. Die aus Dämpfungseinrichtung 12 und Grundkörper 14 bestehende Einheit könnte auch als Aktoreinheit bezeichnet werden. An der Außenseite, insbesondere Unterseite der Steuermoduleinheit 43 befinden sich beispielsweise zwei Busanschlüsse 49a, 49b, über die die interne, an Bord befindliche Busstation 46 an außerhalb bzw. extern angeordnete Komponenten des Bussystems 27, beispielsweise an eine externe Steuereinrichtung 55 über Busleitungen angeschlossen ist. In bevorzugter Weise ist einer der Busanschlüsse 49a als Ausgang und der andere Busanschluss 49b als Eingang ausgebildet. Die einzelnen Positionssensoren 41, 42, 44 sind ebenfalls über interne Busleitungen (nicht dargestellt) mit der Busstation 46 verbunden. Ferner befinden sich an derselben Außenseite, an der die Busanschlüsse 49a, 49b angeordnet sind, also an der Unterseite der Steuermoduleinheit, Fluidanschlüsse 50a, 50b, wobei eine der Fluidanschlüsse 50a zum Anschließen einer ungesteuerten Fluidleitung (nicht dargestellt) dient. Dieser sogenannte Zuluftanschluss 50a ist wiederum über eine Druckleitung 65 mit dem Steuerventil 48 verbunden. Der Arbeitsanschluss des Steuerventils 48 ist wiederum mit der ersten Druckleitung 29 verbunden, so dass gesteuert Druckluft auf den Stellkolben 21 des Stellgliedes 16 gegeben werden kann. Der andere Fluidanschluss 50b ist als sogenannter Abluftanschluss ausgebildet und wiederum über eine dementsprechende Druckleitung (nicht dargestellt) mit dem Steuerventil 48 verbunden, so dass bei Bedarf auch über das Steuerventil 48 entlüftet werden kann.

Die Wirkungsweise des Anschlagmoduls 11 besteht darin, dass ein von rechts kommender Gegenstand 17, der gestrichelt dargestellt ist und beispielsweise auch ein Werkstück, insbesondere Maschinenteil oder dergleichen sein kann, zunächst die erste Anschlagstellung des Anschlagglieds 15 erreicht, wodurch dieses den Dämpfungskolben 36 in den Zylinderraum 35 hineinschiebt. Die verdrängte Luft gelangt über die vierte, kolbenartig ausgebildete Druckleitung 32 und über die dritte Druckleitung 31 in den Zylinderraum 20 des Stellglieds 16 und von dort über ein am Deckel 23 angeordnete Durchgangsöffnung 51 ins Freie. Es kann hier beispielsweise auch ein Schalldämpfer (nicht dargestellt) angeordnet sein, der dadurch erzeugte Geräusche, insbesondere bei hartem Auftreffen des Gegenstandes, unterdrückt. Der Dämpfungsgrad der Dämpfungseinrichtung ist hierbei über die Querschnitte der Druckleitungen 30, 31, 32, 34 einstellbar. Durch den ersten Positionssensor 41 wird das Erreichen der Endanschlagstellung des Anschlagglieds 15 erfasst und der Busstation 46 gemeldet.

Soll der Gegenstand 17 seine Bewegung in die dargestellte Richtung 13 fortsetzen, so wird ein von der Busstation 46 oder von einer externen Steuereinrichtung 55 stammendes Steuersignal an das Steuerventil 48 gegeben, das daraufhin umsteuert, so dass die erste Druckleitung 29 mit einem Druck P beaufschlagt wird. Dieser Druck bewirkt, dass sich der Stellkolben 21 gegen die Kraft der Stellfeder 22 nach unten bewegt und über die Kolbenstange 25 den Dämpfungszylinder 26 und damit das Anschlagglied 15 ebenfalls nach unten zieht. Dadurch kann der Gegenstand 17 dann passieren.

Wenn die obere Kante des Stellkolbens 21 die Position der zweiten Druckleitung 30 erreicht, wird diese ebenfalls mit dem Druck P beaufschlagt, so dass die Druckluft durch die Druckleitungen 31, 32 und 34 zum Zylinderraum 35 strömen kann. Hierdurch wird der Dämpfungskolben 36 in seine erste Anschlagstellung zurückgeführt. Wenn der Gegenstand 17 den zweiten Positionssensor 42 erreicht bzw. passiert hat, wird ebenfalls ein Positionssensorsignal an die Busstation 46 gemeldet, die dann wiederum ein Befehl an das Steuerventil 48 gibt, so dass der Druck P abgestellt wird. Dadurch kann der Stellkolben 21 durch die Kraft der Schraubenfeder 22 wieder in die dargestellte Stellung zurückbewegt werden, wobei die an der Oberseite des Stellkolbens 21 anstehende Druckluft über die erste Druckleitung 29 und das Steuerventil 48 zum Abluftanschluss 49b und von dort ins Freie strömen kann. Erreicht der Dämpfungszylinder und somit das Anschlagglied 15 seine obere Funktionsstellung 45, so wird dies wiederum durch den dritten Positionssensor 44 erkannt und dabei ein Positionssensorsignal an das Bussystem 46 übermittelt. Das Anschlagmodul 11 ist nunmehr bereit, einen neu ankommenden Gegenstand 17 zu vereinzeln.

## Patentansprüche

1. Anschlagmodul, insbesondere für automatische Bearbeitungs- und Fördereinrichtungen, mit einem an einem Grundkörper (14) angeordneten Anschlagglied (15) für sich in einer Bewegungsebene in einer aktuellen Arbeitsbewegungsrichtung (13) bewegende Gegenstände (17), das mittels eines fluidisch betätigbaren Stellgliedes (16) aus dieser Bewegungsebene heraus und in diese zurückbewegbar ist, wobei wenigstens ein Positionssensor (41, 42, 44) vorgesehen ist, mit dem wenigstens die Anschlagposition des an das Anschlagglied (15) anschlagenden Gegenstandes (17) erfassbar ist, **dadurch gekennzeichnet, dass** in das Anschlagmodul (11) eine Busstation (46) für ein Bussystem (47) zur Erfassung und Verarbeitung von Positionssensorsignalen des wenigstens einen Positionssensors (41, 42, 44) und wenigstens ein über das Bussystem (47) elektrisch ansteuerbares, zur Ansteuerung des Stellglieds (16) dienendes Steuerventil (48) integriert sind, wobei eine vom Grundkörper (14) getrennt ausgebildete, daran insbesondere lösbar befestigte Steuermoduleinheit (43) vorgesehen ist, in der die Busstation (46), das Steuerventil (48) und wenigstens einer der Positionssensoren (41, 42, 44) aufgenommen ist.

2. Anschlagmodul nach Anspruch 1, **gekennzeichnet durch** wenigstens einen Fluidanschluss (50a, 50b) zum Anschließen einer ungesteuerten Fluidleitung.

3. Anschlagmodul nach Anspruch 1 oder 2, **gekennzeichnet durch** wenigstens einen Busanschluss (49a, 49b) zum Anschließen einer Busleitung.

4. Anschlagmodul nach einem der vorhergehenden Ansprüche, **dadurch gekennzeichnet, dass** der wenigstens eine Fluidanschluss (50a, 50b) und der wenigstens eine Busanschluss (49a, 49b) an derselben Außenseite des Anschlagmoduls (11) angeordnet sind.

5. Anschlagmodul nach einem der vorhergehenden Ansprüche, **dadurch gekennzeichnet, dass** wenigstens einer der Positionssensoren (44) zur Erfassung der oberen, in der Bewegungsbahn der Gegenstände (17) befindlichen Funktionsposition (45) des Anschlagglieds (15) vorgesehen ist.

6. Anschlagmodul nach einem der vorhergehenden Ansprüche, **dadurch gekennzeichnet, dass** wenigstens einer der Positionssensoren (42) zur Erfassung der Position eines das Anschlagmodul (11) passierenden Gegenstandes (17) vorgesehen ist.

7. Anschlagmodul nach einem der vorhergehenden Ansprüche, **gekennzeichnet durch** eine Dämpfungseinrichtung (12) mittels der das Anschlagglied (15) zwischen einer ersten Anschlagstellung und einer zweiten Endanschlagstellung gedämpft bewegbar ist, wobei es sich bei der mittels des wenigstens einen Positionssensors (41) erfassbaren Anschlagposition um die Endanschlagstellung des Anschlagglieds (15) handelt.

8. Anschlagmodul nach einem der vorhergehenden Ansprüche, **dadurch gekennzeichnet, dass** als Bussystem ein Felsbussystem, insbesondere AS-i-Bussystem (47) vorgesehen ist.

9. Anschlagmodul nach einem der vorhergehenden Ansprüche, **dadurch gekennzeichnet, dass** das Steuerventil (48) als Magnetventil ausgebildet ist.

## Claims

1. Stop module, in particular for automatic machining and conveying equipment, with a stop member (15) mounted on a base (14) for objects (17) moving in a plane of movement in a current operating movement direction (13) and able to be moved out of and back into this plane of movement by means of a fluidically actuable control element (16), wherein there is provided at least one position sensor (41, 42, 44) which may be used to detect at least the stop position of the object (17) hitting against the stop member (15), **characterised in that** there are integrated in the stop module (11) a bus station (46) for a bus system (47) for acquiring and processing position sensor signals of the position sensor or sensors (41, 42, 44) and at least one control valve (48) serving to activate the control element (16) and electrically controllable via the bus system (47), wherein there is provided a control module unit (43), separate from the base (14) and in particular releasably fastened to the latter, and in which the bus station (46), the control valve (48) and at least one of the position sensors (41, 42, 44) are accommodated.

2. Stop module according to claim 1, **characterised by** one or more fluidic connections (50a, 50b) for the connection of an uncontrolled fluid line.

3. Stop module according to claim 1 or 2, **characterised by** one or more bus connections (49a, 49b) for the connection of a bus line.

4. Stop module according to any of the preceding claims, **characterised in that** the fluidic connection or connections (50a, 50b) and the bus connection or connections (49a, 49b) are located on the same outer side of the stop module (11).

5. Stop module according to any of the preceding claims, **characterised in that** at least one of the position sensors (44) is provided to detect the upper function position (45) of the stop member (15) located in the path of movement of the objects (17).

6. Stop module according to any of the preceding claims, **characterised in that** at least one of the position sensors (42) is provided to detect the position of an object (17) passing the stop module (11).

7. Stop module according to any of the preceding claims, **characterised by** a damping device (12) by means of which the stop member (15) may be moved with damping between a first stop position and a second end stop position, wherein the stop position detectable by means of the position sensor or sensors (41) is the end stop position of the stop member (15).

8. Stop module according to any of the preceding claims, **characterised in that** a field bus system, in particular an AS-I bus system (47), is provided as bus system.

9. Stop module according to any of the preceding claims, **characterised in that** the control valve (48) is in the form of a solenoid valve.

## Revendications

1. Module de butée, en particulier pour des dispositifs automatiques d'usinage et de transport, comportant une butée (15) pour des objets (17) mobiles dans un plan de déplacement dans une direction de travail actuelle (13), laquelle est montée sur un corps de base (14) et laquelle, au moyen d'un actionneur (16) apte à être activé par un fluide, peut être déplacée hors de ce plan de déplacement ou dans celui-ci, au moins un capteur de position (41, 42, 44) étant prévu pour détecter au moins la position de butée de l'objet (17) venant heurter contre la butée (15), **caractérisé en ce qu'**un poste de bus (46) pour un système de bus (47), destiné à prélever et traiter les signaux dudit au moins un capteur de position (41, 42, 44), et au moins une vanne pilote (48), destinée à activer l'actionneur (16) et propre à être actionnée électriquement via le système de bus (47), sont intégrés dans le module de butée (11), **en ce qu'**il est prévu une unité modulaire de commande (43), qui est réalisée séparément du corps de base (14) et est fixée à celui-ci en particulier de manière amovible et dans laquelle sont logés le poste de bus (46), la vanne pilote (48) et au moins un des capteurs de position (41, 42, 44).

2. Module de butée selon la revendication 1, **caractérisé par** au moins un raccord de fluide (50a, 50b) pour le branchement à une conduite de fluide non commandée.

3. Module de butée selon la revendication 1 ou 2, **caractérisé par** au moins un raccord de bus (49a, 49b) pour le branchement à une ligne de bus.

4. Module de butée selon l'une des revendications précédentes, **caractérisé en ce que** ledit au moins un raccord de fluide (50a, 50b) et ledit au moins un raccord de bus (49a, 49b) sont disposés sur le même côté extérieur du module de butée (11).

5. Module de butée selon l'une des revendications précédentes, **caractérisé en ce qu'**au moins un des capteurs de position (44) est prévu pour détecter la position fonctionnelle (45) supérieure de la butée (15), laquelle position est située dans la trajectoire de mouvement des objets (17).

6. Module de butée selon l'une des revendications précédentes, **caractérisé en ce qu'**au moins un des capteurs de position (42) est prévu pour détecter la position d'un objet (17) franchissant le module de butée (11).

7. Module de butée selon l'une des revendications précédentes, **caractérisé par** un amortisseur (12), au moyen duquel la butée (15) est apte à se déplacer de manière amortie entre une première position de butée et une deuxième position de butée finale, la position de butée, apte à être détectée par ledit au moins un capteur de position (41), étant ici la position de butée finale de la butée (15).

8. Module de butée selon l'une des revendications précédentes, **caractérisé en ce qu'**un système de bus de terrain, en particulier un système de bus AS-i (47), est prévu pour former le système de bus.

9. Module de butée selon l'une des revendications précédentes, **caractérisé en ce que** la vanne pilote (48) est réalisée sous forme de vanne magnétique.
